# EUROPÄISCHE PATENTANMELDUNG

(11) **EP 3 189 947 A1**
(43) Veröffentlichungstag der Anmeldung: **12.07.2017**
(21) Anmeldenummer: 16150475.8
(22) Anmeldetag: 07.01.2016
(51) Int. Cl.: B25J 9/16

(54) **VERFAHREN ZUM KONFIGURIEREN UND ZUM BETREIBEN EINER ÜBERWACHTEN AUTOMATISIERTEN ARBEITSZELLE UND KONFIGURATIONSVORRICHTUNG**

(71) Anmelder: SICK AG, 79183 Waldkirch (DE)
(72) Erfinder: Braune, Ingolf, 79194 Gundelfingen (DE)

(57) **Zusammenfassung**

Die Erfindung betrifft ein Verfahren zum Konfigurieren und zum Betreiben einer überwachten automatisierten Arbeitszelle (A), wobei die Arbeitszelle (A) zumindest eine gefahrbringende Maschine (M) und zumindest eine Überwachungseinrichtung (1) aufweist, wobei das Verfahren die folgenden Schritte umfasst:
Übermitteln von Maschinenraumdaten, die zumindest einen Arbeitsraum (2, 2a) der Maschine (M) definieren, an eine Konfigurationsvorrichtung (5) für die Überwachungseinrichtung (1), Erstellen von Schutzraumdaten anhand der Maschinenraumdaten durch die Konfigurationsvorrichtung (5), wobei die Schutzraumdaten zumindest einen Schutzraum (4, 4a) der Überwachungseinrichtung (1) definieren, der den Arbeitsraum (2, 2a) der Maschine (M) derart umfasst, dass der Schutzraum (4, 4a) vollständig oder teilweise dem Arbeitsraum (2, 2a) entspricht oder der Schutzraum (4, 4a) größer als der Arbeitsraum (2, 2a) ist, und Übertragen der Schutzraumdaten an die Überwachungseinrichtung (1), so dass die Überwachungseinrichtung (1) den Schutzraum (4, 4a) überwacht, und eine Konfigurationsvorrichtung (5) zum Konfigurieren einer eine automatisierte Arbeitszelle (A) überwachenden Überwachungseinrichtung (1).

## Beschreibung

Die vorliegende Erfindung betrifft ein Verfahren zum Konfigurieren und zum Betreiben einer überwachten automatisierten Arbeitszelle und eine Konfigurationsvorrichtung zum Konfigurieren einer eine automatisierte Arbeitszelle überwachenden Überwachungseinrichtung.

In der Automatisierungsindustrie werden immer mehr automatisierte Arbeitszellen eingesetzt, die durch eine zentrale Produktionsteuerung gesteuert werden und völlig autark Produktionsschritte durchführen. Hierbei weisen die automatisierten Arbeitszellen zumindest eine gefahrbringende Maschine auf, die beispielsweise in Form eines mehrachsigen Roboters besteht. Der mehrachsige Roboter ist durch seine hohe Masse und seine schnellen kinematischen Bewegungsabläufe gefahrbringend für das Werkspersonal, so dass eine Robotersteuerung eine hohe Anzahl von Sicherheitsfunktionen aufweist, um einen sicheren und unterbrechungsfreien Betrieb des mehrachsigen Roboters bzw. der Arbeitszellen zu gewährleisten. Hierbei sind Bewegungsabläufe des Roboters sicher und kollisionsfrei programmiert bzw. geteacht, so dass der Roboter und insbesondere sein Tool-Center-Point und seine Gelenke in einem definierten Arbeitsraum gefahrlos bewegt werden kann bzw. können.

Um den sicheren Betrieb der Arbeitszellen zu gewährleisten, werden die Arbeitszellen mittels zumindest einer zusätzlichen Überwachungseinrichtung überwacht, wobei die Überwachungseinrichtung dafür vorgesehen ist, einen Schutzraum um den mehrachsigen Roboter herum zu überprüfen, ob sich in dem überprüften Schutzraum eine Person oder ein Objekt aufhält oder eine Kollision mit einem Hindernis oder einer Person ereignen könnte.

Hierbei bildet der Schutzraum einen Teilbereich eines gesamten Sichtbereichs der Überwachungseinrichtung und deckt sich, zumindest teilweise, mit dem Arbeitsraum des mehrachsigen Roboters. Falls keine Kollisionsgefahr besteht, wird der Betrieb des mehrachsigen Roboters freigegeben. Nach einer Freigabe des Betriebs des mehrachsigen Roboters wird der Schutzraum oder Teilbereiche des Schutzraumes weiterhin permanent durch die Überwachungseinrichtung kontrolliert. Bei Bestehen einer Kollisionsgefahr löst die Überwachungseinrichtung einen sicheren Stopp des mehrachsigen Roboters aus.

Bei einer Flexibilisierung von Produktionsprozessen ist es häufig unumgänglich, eine Kollaboration zwischen der automatisierten Maschine und dem Bedienungspersonal vorzusehen. Hierdurch besteht die Notwendigkeit, dass die Überwachungseinrichtung den Schutzraum der automatisierten Maschine, insbesondere angepasst an die unterschiedlichen Fertigungsschritte und flexiblen Arbeitsschritte, erfassen und bewerten muss.

Mit anderen Worten, die Überwachungseinrichtung muss zwischen der Kontur der automatisierten Maschine und des Bedienpersonals unterscheiden. Dies erfordert, wie in EP 2 275 990 B1 offenbart, eine hochkomplexe und damit teure Überwachungseinrichtung bzw. Auswertelogik sowie eine hohe Rechenkapazität einer Steuereinheit der Überwachungseinrichtung, um den Schutzraum der Überwachungseinrichtung dynamisch an die Bewegung der Maschine ständig anzupassen.

Ferner werden gegenwärtig die Arbeitszelle, insbesondere die Bewegungsabläufe des mehrachsigen Roboters, und die Überwachungseinrichtung unabhängig voneinander programmiert bzw. konfiguriert. Programmieren bzw. Konfigurieren bedeuten in diesem Zusammenhang ein Erstellen von geometrischen Daten des Arbeitsraums der Maschine bzw. des Schutzraums der Überwachungseinrichtung in Abhängigkeit eines Koordinatensystems der Maschine und eines Koordinatensystems der Überwachungseinrichtung.

Hierdurch ist eine Änderung von Funktionen oder Abläufen in der automatisierten Arbeitszelle mit viel Arbeitsaufwand und Kosten verbunden.

Es ist eine Aufgabe der vorliegenden Erfindung, ein Verfahren zum Konfigurieren und zum Betreiben einer überwachten automatisierten Arbeitszelle zur Verfügung zu stellen, das einen kostengünstigen Betrieb, einfache Installationen und unkomplizierte Anpassungen bei hoher Sicherheit der Arbeitszelle ermöglicht.

Die Aufgabe wird erfindungsgemäß durch ein Verfahren zum Konfigurieren und zum Betreiben einer überwachten automatisierten Arbeitszelle gelöst, wobei die Arbeitszelle zumindest eine gefahrbringende Maschine und zumindest eine Überwachungseinrichtung aufweist, wobei das Verfahren die folgenden Schritte umfasst: Übermitteln von Maschinenraumdaten, die zumindest einen Arbeitsraum der Maschine definieren, an eine Konfigurationsvorrichtung für die Überwachungseinrichtung, Erstellen von Schutzraumdaten anhand der Maschinenraumdaten durch die Konfigurationsvorrichtung, wobei die Schutzraumdaten zumindest einen Schutzraum der Überwachungseinrichtung definieren, der den Arbeitsraum der Maschine derart umfasst, dass der Schutzraum vollständig oder teilweise dem Arbeitsraum entspricht oder der Schutzraum größer als der Arbeitsraum ist, und Übertragen der Schutzraumdaten an die Überwachungseinrichtung, so dass die Überwachungseinrichtung den Schutzraum überwacht.

Es ergibt sich ein weiterer Vorteil, dass eine sichere und einfache Konfiguration der Arbeitszelle gewährleistet werden kann, da die den Arbeitsraum definierenden Maschinenraumdaten der Maschine auch geteacht vorliegen können und die den Schutzraum definierenden Schutzraumdaten der Überwachungseinrichtung aus diesen Maschinenraumdaten einfach hergeleitet werden können.

Gemäß einem bevorzugten Ausführungsbeispiel werden die Maschinenraumdaten und die Schutzraumdaten auf Konsistenz überprüft und die Konfiguration des Schutzraums der Überwachungseinrichtung erst bei einer korrekten Parametrierung und Abstimmung zwischen den Maschinen- und Schutzraumdaten freigegeben. Hierdurch kann Fehlerfreiheit der Schutzraumkonfiguration der überwachten automatisierten Arbeitszelle gewährleistet werden.

Gemäß einem weiteren bevorzugten Ausführungsbeispiel werden die Maschinenraumdaten von einer Maschinensteuerung der Maschine in Abhängigkeit eines Koordinatensystems der Maschine erstellt. Vorteilhafterweise werden die Schutzraumdaten an das Koordinatensystem der Maschine angepasst.

Hierzu werden die internen Koordinatensysteme der Maschine und der Überwachungseinrichtung zueinander registriert. Der weitere Datenaustausch kann hierdurch vorteilhafterweise anhand eines Koordinatensystems erfolgen.

Hieraus ergibt sich der Vorteil, dass die automatisierte Arbeitszelle, insbesondere der Arbeitsraum der Maschine und der Schutzraum der Überwachungseinrichtung, sehr flexibel konfiguriert bzw. geändert werden kann, wobei alle Daten, sowohl die Maschinenraumdaten als auch die Schutzraumdaten, auf ein gemeinsames Koordinatensystem angepasst sind.

Gemäß einem weiteren bevorzugten Ausführungsbeispiel wird der Schutzraum manuell oder automatisch verändert, so dass der Schutzraum gegenüber dem Arbeitsraum um zumindest einen zusätzlichen Schutzraum vergrößert wird. Weiterhin ist es vorteilhaft, dass der erste Schutzraum und die zusätzlichen Schutzräume in Abhängigkeit einer Bewegungsbahn der Maschine unterschiedlich aktiviert und deaktiviert werden.

Gemäß einem weiteren bevorzugten Ausführungsbeispiel werden die Schritte des Übermitteins der Maschinenraumdaten, des Erstellens der Schutzraumdaten, und des Übertragens der Schutzraumdaten vollautomatisiert durchgeführt und nur der Schritt des Freigebens der Arbeitszelle wird nach einer Überprüfung manuell durchgeführt. Die Schutzraumdaten können weiterhin manuell angepasst werden oder es können auch zusätzliche Schutzräume konfiguriert werden.

Gemäß einem weiteren bevorzugten Ausführungsbeispiel definieren die Maschinenraumdaten mehrere Arbeitsräume und die aus den Maschinenraumdaten erstellten Schutzraumdaten entsprechen mehreren Schutzräumen, die mit den jeweiligen Arbeitsräumen deckend übereinstimmen. Hieraus ergibt sich der Vorteil, dass die Schutzräume der Überwachungseinrichtung zeitsparend und lückenfrei auf die Arbeitsräume der Maschine angepasst werden können. Dies ist dann von Vorteil, wenn die Maschine alternative Bereiche z.B. für Rohteile und Fertigteile bedient. Auch hier ist es von Vorteil, die Schutzräume der Arbeitsbereiche mit weiteren vorgelagerten Schutzräumen zu ergänzen.

Gemäß einem weiteren bevorzugten Ausführungsbeispiel bestehen die Maschinenraumdaten aus Raumkoordinaten des Koordinatensystems der Maschine, wobei die Maschinenraumdaten in einer der Maschinen spezifischen Sprache erstellt sind, und die Schutzraumdaten bestehen ebenfalls aus Raumkoordinaten des Koordinatensystems der Maschine, wobei die Schutzraumdaten in einer der Überwachungseinrichtung spezifischen Sprache erstellt sind.

Es ist ferner eine Aufgabe der Erfindung, eine Konfigurationsvorrichtung zum Konfigurieren einer eine automatisierte Arbeitszelle überwachenden Übereinrichtungseinrichtung zur Verfügung zu stellen, die einen kostengünstigen Betrieb, einfache Installationen und unkomplizierte Anpassungen bei hoher Sicherheit der Arbeitszelle ermöglicht.

Die Aufgabe wird erfindungsgemäß durch eine Konfigurationsvorrichtung zum Konfigurieren einer eine automatisierte Arbeitszelle überwachenden Überwachungseinrichtung gelöst, wobei die Arbeitszelle zumindest eine gefahrbringende Maschine, insbesondere einen mehrachsigen Roboter, aufweist, und die Überwachungseinrichtung eine Steuereinheit aufweist. Die Konfigurationsvorrichtung umfasst eine Empfangseinheit zum Empfangen von Maschinenraumdaten, die zumindest einen Arbeitsraum der Maschine definieren, eine Erstellungseinheit zum Erstellen von Schutzraumdaten aus den Maschinenraumdaten, wobei die Schutzraumdaten zumindest einen Schutzraum der Überwachungseinrichtung definieren, der den Arbeitsraum der Maschine derart umfasst, dass der Schutzraum vollständig oder teilweise dem Arbeitsraum entspricht oder der Schutzraum größer als der Arbeitsraum ist, und eine Übertragungseinheit zum Übertragen der Schutzraumdaten an die Steuereinheit der Überwachungseinrichtung, so dass die Überwachungseinrichtung den Schutzraum überwacht.

Gemäß einem bevorzugten Ausführungsbeispiel ist die Konfigurationsvorrichtung physisch getrennt von der Maschinensteuerung der Maschine und von der Überwachungseinrichtung oder physisch in der Überwachungseinrichtung vorgesehen.

Gemäß einem weiteren bevorzugten Ausführungsbeispiel sind die Maschinenraumdaten und die Schutzraumdaten auf ein gemeinsames Koordinatensystem, vorzugsweise das Koordinatensystem der Maschine, rückbezogen.

Da die Maschinenraumdaten und die Schutzraumdaten in Bezug zu dem gemeinsamen Koordinatensystem der Maschine erstellbar sind, ergibt sich hieraus der Vorteil, dass die Daten der Maschine und der Überwachungseinrichtung einfach aneinander angepasst werden können, so dass eine flexible Konfiguration der Arbeitszellen zeitsparend durchgeführt werden kann. Vorteilhafterweise umfasst das Koordinatensystem ein kartesisches Koordinatensystem oder ein Polarkoordinatensystem.

Gemäß einem weiteren bevorzugten Ausführungsbeispiel ist die Erstellungseinheit der Konfigurationsvorrichtung angepasst, die Schutzraumdaten manuell oder automatisch um einen vorgebbaren Wertebereich zu erweitern, so dass der durch die Schutzraumdaten definierte Schutzraum um zumindest einen zusätzlichen Schutzraum vergrößert ist.

Gemäß einem weiteren bevorzugten Ausführungsbeispiel ist eine Prüfeinheit zum Prüfen der Maschinenraumdaten und der Schutzraumdaten auf eine Übereinstimmung in ihren Koordinaten vorgesehen. Dadurch können fehlerhafte Lücken zwischen dem Arbeitsraum der Maschine und dem Schutzraum der Überwachungseinrichtung sicher identifiziert und korrigiert werden.

Gemäß einem weiteren bevorzugten Ausführungsbeispiel ist eine Bestätigungseinheit zum Freigeben der Konfiguration des Schutzraums der Überwachungseinrichtung bei einer Konsistenz zwischen den Maschinen- und Schutzraumdaten und einer korrekten Parametrierung und Abstimmung zwischen den Maschinen- und Schutzraumdaten vorgesehen. Hierdurch ist eine korrekte Umsetzung der Sicherheitsanforderungen an die Konfiguration zur Überwachung der Arbeitszelle gewährleistet.

Bevorzugte Ausgestaltungen und Weiterbildungen sowie weitere Vorteile der Erfindung sind den Unteransprüchen, der nachfolgenden Beschreibung und den Zeichnungen zu entnehmen.

Im Folgenden wird die Erfindung anhand von Ausführungsbeispielen unter Bezugnahme auf die Zeichnungen im Einzelnen erläutert. In den Zeichnungen zeigen:
- Fig. 1: eine schematische Darstellung einer erfindungsgemäß überwachten und automatisierten Arbeitszelle;
- Fig. 2: eine schematische Darstellung eines bevorzugten Ausführungsbeispiels einer erfindungsgemäß konfigurierten Arbeitszelle; und
- Fig. 3: eine weitere schematische Darstellung des bevorzugten Ausführungsbeispiels der Figur 2.

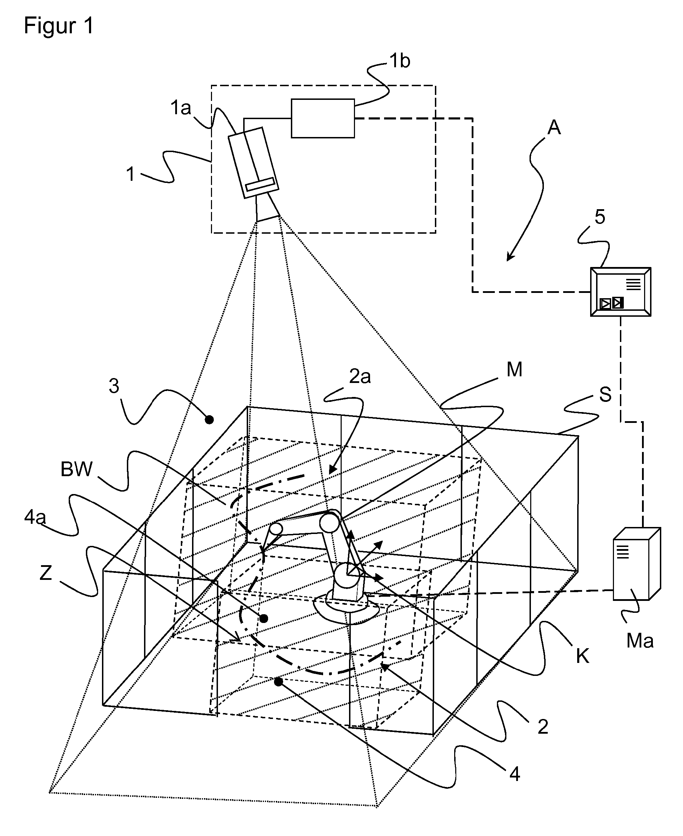

In der Figur 1 ist schematisch eine überwachte automatisierte Arbeitszelle A dargestellt, die eine gefahrbringende Maschine M in Form eines mehrachsigen Roboters und eine Überwachungseinrichtung 1 umfasst. Die Maschine M ist in der Arbeitszelle A aufgestellt und vorzugsweise durch einen Schutzzaun S umstellt, wobei der Schutzzaun S zumindest einen Zugang Z zu der Maschine M aufweist. Durch den Zugang Z kann sich eine Bedienperson in die Arbeitszelle A und somit in die Nähe der gefahrbringenden Maschine M begeben.

An der Maschine M ist ein Koordinatensystem K angenommen, so dass in Bezug auf das Koordinatensystem K Maschinenraumdaten erstellt werden, die einen Arbeitsraum 2, 2a der Maschine M bzw. des Roboters definieren. Hierbei umfasst der definierte Arbeitsraum 2, 2a der Maschine M sämtliche Bewegungsbahnen bzw. -abläufe BW der Maschine M während deren Betrieb, die durch Programmieren der Maschine M oder durch ein sogenanntes Teachen erzeugt werden. Die Maschinenraumdaten können sowohl in kartesischen Koordinaten als auch in Polarkoordinaten vorliegen, wobei die Maschinenraumdaten die Raumkoordinaten des Arbeitsraums 2, 2a der Maschine M beinhalten. Hierbei sind die Maschinenraumdaten in einer der Maschinen M spezifischen Sprache erstellt, die von dem Maschinenhersteller vorgegeben ist.

Der Arbeitsraum 2, 2a der Maschine M liegt innerhalb eines umzäunten Bereichs des Schutzzaunes S, wobei entsprechend einer Anwendung auch mehrere voneinander beabstandete oder zusammenhängende Arbeitsräume 2 und 2a vorgesehen werden können.

Der gesamte umzäunte Bereich des Schutzzaunes S steht vorzugsweise im Sichtbereich 3 der Überwachungsreinrichtung 1, wobei der Sichtbereich 3 der Überwachungseinrichtung 1 darüber hinaus einen Zugangsraum 4 zu dem umzäunten Bereich des Schutzzaunes S und somit zu dem Arbeitsraum 2, 2a der Maschine M abdeckt.

Die Überwachungseinrichtung 1 besteht vorzugsweise aus zumindest einer sicheren Kamera oder zumindest einem sicheren Scanner. Die sichere Kamera bzw. der sichere Scanner bildet eine Erfassungseinheit 1a der Überwachungseinrichtung 1, die den Arbeitsraum 2, 2a und den Zugangsraum 4 der Arbeitszelle A erfasst. Die Überwachungseinrichtung 1 umfasst eine Steuereinheit 1 b, die die Überwachungseinrichtung 1 steuert und bei einer gefahrbringenden Situation einen sicheren Zustand der gefahrbringenden Maschine M, z.B. ein sicheres Anhalten bzw. einen sicheren Stopp, veranlasst.

Bei einem erfindungsgemäßen Verfahren werden die Maschinenraumdaten der Maschine M von einer Maschinensteuerung Ma der Maschine M oder von einer übergeordneten Systemsteuerung, z.B. eine Sicherheits-SPS, an eine Konfigurationsvorrichtung 5 übermittelt, wobei die Maschinenraumdaten exakte geometrische Koordinaten des Arbeitsraums 2, 2a der gefahrbringenden Maschine M enthalten. Schutzraumdaten, die zumindest einen Schutzraum 4, 4a der Überwachungseinrichtung 1 definieren, werden anhand der Maschinenraumdaten durch die Konfigurationsvorrichtung 5 erstellt, wobei der Schutzraum 4, 4a identisch ist mit dem Arbeitsraum 2, 2a der Maschine M. Die Schutzraumdaten werden an die Überwachungseinrichtung 1 übertragen, so dass die Arbeitszelle A gestartet und von der Überwachungseinrichtung 1 überwacht werden kann.

Die erstellten Schutzraumdaten werden auf eine Übereinstimmung zwischen dem Arbeitsraum 2, 2a und dem Schutzraum 4, 4a überprüft und bei einer Übereinstimmung wird die Arbeitszelle A freigegeben.

Hierbei bedeutet Übereinstimmung, dass die Grenzlinien des Arbeitsraums 2, 2a der Maschine M den Grenzlinien des Schutzraums 4, 4a der Überwachungseinrichtung 1 entsprechen. Hierdurch wird die Konfiguration der Arbeitszelle A, insbesondere die Anpassung des Schutzraums 4, 4a der Überwachungseinrichtung 1 auf den Arbeitsraum 2, 2a der Maschine M, fehlersicherer, da keine unsicheren Lücken zwischen dem Schutzraum 4, 4a der Überwachungseinrichtung 1 und dem Arbeitsraum 2, 2a der Maschine M durch nicht konfigurierte bzw. unangepasste Grenzen entstehen können.

Mit anderen Worten, die Konfigurationsvorrichtung 5 empfängt mittels einer Empfangseinheit die Maschinenraumdaten von der Maschinensteuerung Ma oder der übergeordneten Systemsteuerung und erstellt mittels einer Erstellungseinheit anhand der Maschinenraumdaten Schutzraumdaten, die zumindest einen Schutzraum 4, 4a der Überwachungseinrichtung 1 definieren, wobei der Schutzraum 4, 4a der Überwachungseinrichtung 1 teilweise oder vollständig identisch mit dem Arbeitsraum 2, 2a der Maschine M ist oder größer als der Arbeitsraum 2, 2a der Maschine M ist. Die Schutzraumdaten enthalten die exakten geometrischen Koordinaten des Schutzraums 4, 4a und sind vorteilhafterweise auf das Koordinatensystem K der Maschine M bezogen. Ferner sind die Schutzraumdaten in einer der Überwachungseinrichtung 1 spezifischen Sprache erstellt.

Hierdurch ist es vorteilhaft, dass das Bedienungspersonal der Arbeitszelle A den Schutzraum 4, 4a der Überwachungseinrichtung 1 nicht manuell an den Arbeitsraum 2, 2a der Maschine M anpassen muss, damit die Arbeitszelle A durch die Überwachungseinrichtung 1 überwacht und geschützt ist.

Die erstellten Schutzraumdaten überträgt eine Übertragungseinheit der Konfigurationsvorrichtung 5 an die Steuereinheit 1b der Überwachungseinrichtung 1, so dass der Arbeitsraum 2, 2a der Maschine M durch die Überwachungseinrichtung 1 sicher und lückenlos überwacht werden kann.

Vorzugsweise überprüft eine Überprüfungseinheit der Konfigurationsvorrichtung 5 anhand der Maschinenraumdaten und der Schutzraumdaten auf eine Konsistenz zwischen dem Arbeitsraum 2, 2a der Maschine M und dem Schutzraum 4, 4a der Überwachungseinrichtung 1.

Bei einer Konsistenz der Maschinenraumdaten und der Schutzraumdaten ist die Arbeitszelle A mittels einer Bestätigungseinheit der Überwachungseinrichtung 1 freigegeben. Dadurch erhält die Überwachungseinrichtung 1 erfindungsgemäß die geometrischen Koordinaten für ihren Schutzraum 4, 4a, um den Arbeitsraum 2, 2a der Maschine M sicher zu überwachen.

Durch die Überprüfung auf die Konsistenz zwischen dem Arbeitsraum 2, 2a und dem Schutzraum 4, 4a ist vorteilhafterweise sichergestellt, dass die Konfiguration des Schutzraums 4, 4a der Überwachungseinrichtung 1 auf einem aktuellen Stand ist und der konfigurierte Schutzraum 4, 4a sich konfliktfrei zu dem von der Maschinensteuerung Ma vorgegebenen Arbeitsraum 2, 2a der Maschine M verhält.

Im Falle, dass prozessbedingt die geometrischen Koordinaten, d.h. die Maschinenraumdaten, des Arbeitsraums 2, 2a der Maschine M geändert werden, ist es erfindungsgemäß auf einfachste Weise möglich, die geometrischen Koordinaten, d.h. die Schutzraumdaten, des Schutzraums 4, 4a der Überwachungseinrichtung 1 entsprechend anzupassen. Die Konfiguration der Arbeitszelle A bleibt somit einfach und flexibel durchführbar. Hierbei ist es vorteilhaft, dass die Schritte des Übermitteins der Maschinenraumdaten, des Erstellens der Schutzraumdaten, des Überprüfens auf die übereinstimmende Deckung und des Übertragens der Schutzraumdaten an die Überwachungseinrichtung 1 vollautomatisch durchgeführt werden und lediglich der Schritt des Freigebens der Konfiguration der Arbeitszelle A manuell durchgeführt wird.

Ferner kann bei der Änderung der Konfiguration, d.h. der Maschinenraumdaten des Arbeitsraums 2, 2a der Maschine M und entsprechend auch der Schutzraumdaten des Schutzraums 4, 4a der Überwachungseinrichtung 1, ein automatischer Abgleich der Daten fehlersicherer erfolgen und das Bedienungspersonal über eine Kollisions- bzw. Änderungsliste an zu überprüfende oder zu ändernde Punkte in der Konfiguration geführt werden, wodurch die Konfigurationsänderung einfacher, sicherer und zuverlässiger durchführbar ist.

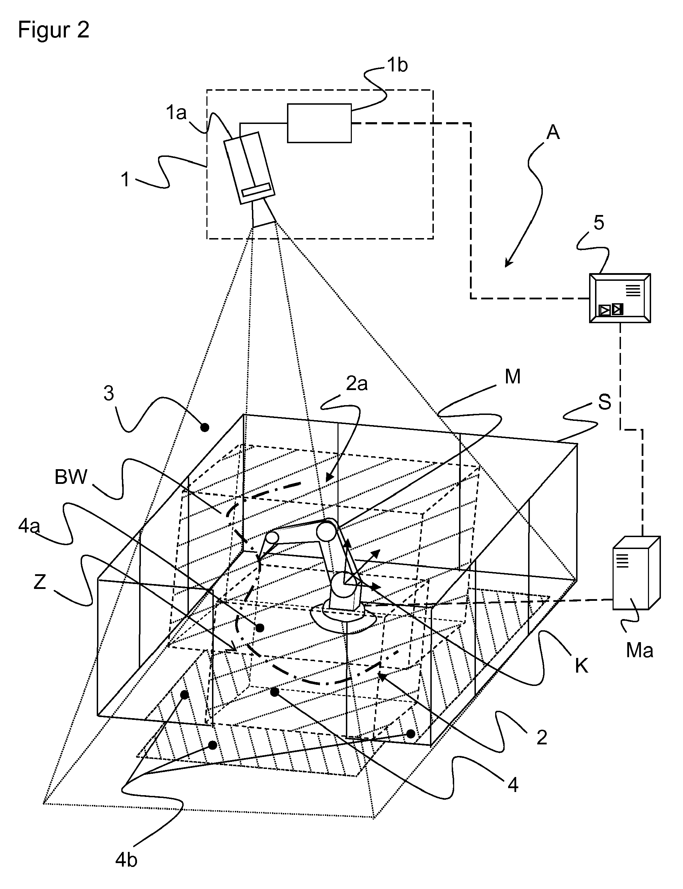

In der Figur 2 ist es vorteilhafterweise gezeigt, dass der durch die Schutzraumdaten definierte Schutzraum 4, 4a manuell oder automatisch veränderbar ist bzw. verändert wird, so dass der Schutzraum 4, 4a gegenüber dem Arbeitsraum 2, 2a um zusätzliche Schutzräume 4b vergrößert ist bzw. wird.

D.h. die Empfangseinheit der Konfigurationsvorrichtung 5 empfängt die Maschinenraumdaten des Arbeitsraums 2, 2a von der Maschinensteuerung Ma der Maschine M oder von der übergeordneten Systemsteuerung und die Erstellungseinheit der Konfigurationsvorrichtung 5 erstellt die Schutzraumdaten für den Schutzraum 4, 4a der Überwachungseinrichtung 1.

Zusätzlich gemäß dem Ausführungsbeispiel werden um den erstellten Schutzraum 4, 4a weitere zusätzliche Schutzräume 4b erstellt bzw. definiert, die beispielsweise den Zugang Z zu der Arbeitszelle A und Randbereiche zwischen dem Arbeitsraum 2, 2a der Maschine M und dem Schutzzaun S umfassen. Hierbei ist es vorzugsweise vorgesehen, dass die den Schutzraum 4, 4a definierenden und mit den Daten des Arbeitsraums 2, 2a übereinstimmenden Schutzraumdaten um einen vorgebbaren Wertebereich erweitert wird, beispielsweise Schutzraumdaten plus einen Meter, so dass der durch die Schutzraumdaten definierte Schutzraum 4, 4a um zumindest einen zusätzlichen Schutzraum 4b, beispielsweise um einen Meter in sämtliche Richtung des Koordinatensystems K der Maschine M, vergrößert ist.

Der zusätzliche Schutzraum 4b, insbesondere im Bereich des Zugangs Z, ermöglicht der Überwachungseinrichtung 1 eine erhöhte Reaktionszeit auf eine Verletzung des Schutzraums 4b vorzusehen, so dass eine Warnung an das Bedienungspersonal ausgegeben werden kann oder die Maschine M schonend verlangsamt wird, wodurch die Arbeitszelle A als sichere Reaktion nicht unbedingt stoppen muss, wenn das Bedienungspersonal den zusätzlichen Schutzraum 4b wieder verlässt oder auch die Bewegungsgeschwindigkeit auf ein ungefährliches Maß begrenzt werden kann und taktile Schutzsysteme aktiviert werden können.

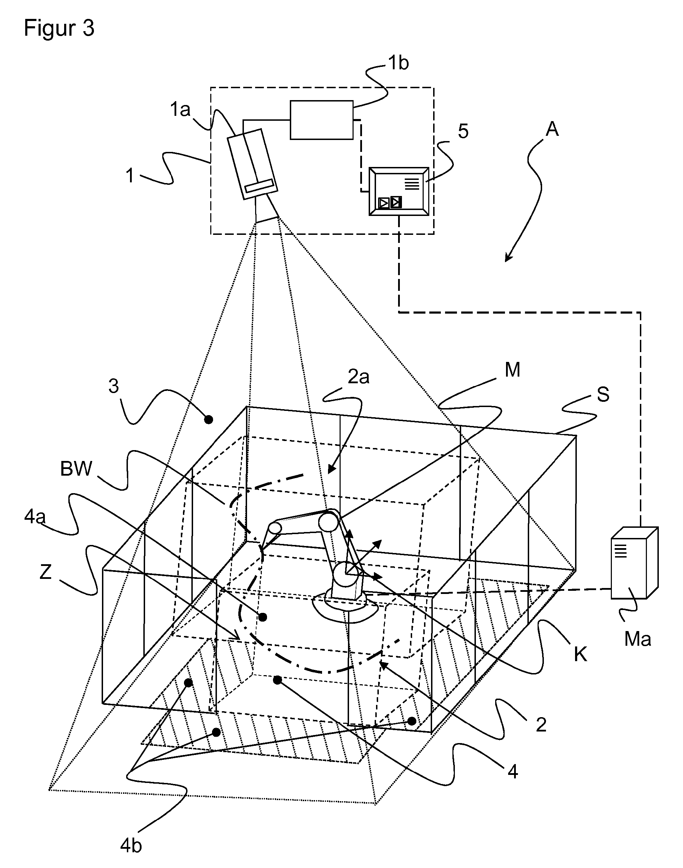

Mit dem Vorsehen der zusätzlichen Schutzräume 4b ist es insbesondere möglich, wie in der Figur 3 gezeigt, die Arbeitszelle A bzw. die Überwachungseinrichtung 1 derart zu konfigurieren, dass in Abhängigkeit der Bewegungsbahn BW der Maschine M die Schutzräume 4, 4a und die zusätzlichen Schutzräume 4b unterschiedlich aktiviert oder deaktiviert werden können.

Beispielsweise überprüft die Überwachungseinrichtung 1 die mit den Arbeitsräumen 2, 2a der Maschine M deckungsgleichen Schutzräume 4, 4a auf Objektfreiheit. Zusätzlich überprüft die Überwachungseinrichtung 1 die zusätzlichen Schutzräume 4b, ob sich Personen in diesen Bereichen aufhalten.

Wenn die Schutzräume 4, 4a und damit die Arbeitsräume 2, 2a der Maschine M objektfrei sind und keine Personen sich in den zusätzlichen Schutzräumen 4b aufhalten, ist die Arbeitszelle A startbereit und kann ihre Tätigkeit aufnehmen.

Nach dem Start der Maschine M werden die Schutzräume 4, 4a anhand der Daten der Bewegungsbahn BW der Maschine M deaktiviert und die zusätzlichen Schutzräume 4b von der Überwachungseinrichtung 1 weiterhin aktiv überwacht.

Hierdurch kann die Maschine M in ihren Arbeitsräumen 2, 2a und in den deaktivierten Schutzräumen 4, 4a frei agieren und die Überwachungseinrichtung 1 ist lediglich mit der Auswertung der Überwachung der zusätzlichen Schutzräume 4b bzw. der Absicherung des Umfelds der Maschine M aktiv.

Zusätzlich gegenüber der Figur 2 ist in der Figur 3 gezeigt, dass die Konfigurationsvorrichtung 5 in der Überwachungseinrichtung 1 vorzugsweise integriert vorgesehen ist, wobei die Konfigurationsvorrichtung 5, wie in den Figuren 1 und 2 gezeigt, auch physisch von der Überwachungseinrichtung 1 und von der Maschinensteuerung Ma getrennt sein kann.

Mit anderen Worten, die Konfigurationsvorrichtung 5 umfasst programmierte Logik, die beispielweise die Empfangseinheit, die Erstellungseinheit, die Prüfeinheit, die Bestätigungseinheit und die Übertragungseinheit bilden und separat oder integriert in die Steuereinheit 1b der Überwachungseinrichtung 1 implementiert sein können.

### Bezugszeichenliste

- 1: Überwachungseinrichtung
- 1a: Erfassungseinheit
- 1b: Steuereinheit
- 2, 2a: Arbeitsraum
- 3: Sichtbereich
- 4, 4a: Schutzraum
- 4b: Zusätzlicher Schutzraum
- 5: Konfigurationsvorrichtung
- A: Automatisierte und überwachte Arbeitszelle
- BW: Bewegungsplan
- K: Koordinatensystem
- M: Maschine bzw. Roboter
- Ma: Maschinensteuerung
- S: Schutzzaun
- Z: Zugang

## Patentansprüche

1. Verfahren zum Konfigurieren und zum Betreiben einer überwachten automatisierten Arbeitszelle (A), wobei die Arbeitszelle (A) zumindest eine gefahrbringende Maschine (M) und zumindest eine Überwachungseinrichtung (1) aufweist, wobei das Verfahren die folgenden Schritte umfasst:
Übermitteln von Maschinenraumdaten, die zumindest einen Arbeitsraum (2, 2a) der Maschine (M) definieren, an eine Konfigurationsvorrichtung (5) für die Überwachungseinrichtung (1),
Erstellen von Schutzraumdaten anhand der Maschinenraumdaten durch die Konfigurationsvorrichtung (5), wobei die Schutzraumdaten zumindest einen Schutzraum (4, 4a) der Überwachungseinrichtung (1) definieren, der den Arbeitsraum (2, 2a) der Maschine (M) derart umfasst, dass der Schutzraum (4, 4a) vollständig oder teilweise dem Arbeitsraum (2, 2a) entspricht oder der Schutzraum (4, 4a) größer als der Arbeitsraum (2, 2a) ist, und
Übertragen der Schutzraumdaten an die Überwachungseinrichtung (1), so dass die Überwachungseinrichtung (1) den Schutzraum (4, 4a) überwacht.

2. Verfahren nach Anspruch 1, wobei die Maschinenraumdaten und die Schutzraumdaten auf eine Konsistenz überprüft werden und die Konfiguration des Schutzraums (4, 4a) der Überwachungseinrichtung (1) erst bei einer korrekten Parametrierung und Abstimmung zwischen den Maschinen- und Schutzraumdaten freigegeben wird.

3. Verfahren nach Anspruch 1 oder 2, wobei die Maschinenraumdaten von einer Maschinensteuerung (Ma) der Maschine (M) in Abhängigkeit eines Koordinatensystems (K) der Maschine (M) erstellt werden.

4. Verfahren nach Anspruch 3, wobei die Schutzraumdaten an dem Koordinatensystem (K) der Maschine (M) angepasst werden.

5. Verfahren nach einem der vorhergehenden Ansprüche, wobei der Schutzraum (4, 4a) manuell oder automatisch verändert wird, so dass der Schutzraum (4, 4a) gegenüber dem Arbeitsraum (2, 2a) um zumindest einen zusätzlichen Schutzraum (4b) vergrößert wird.

6. Verfahren nach Anspruch 5, wobei der Schutzraum (4, 4a) und die zusätzlichen Schutzräume (4b) in Abhängigkeit einer Bewegungsbahn (BW) der Maschine (M) unterschiedlich aktiviert und deaktiviert werden.

7. Verfahren nach einem der vorgehenden Ansprüche, wobei die Schritte des Übermitteins der Maschinenraumdaten, des Erstellens der Schutzraumdaten, und des Übertragens der Schutzraumdaten vollautomatisiert durchgeführt werden und der Schritt des Freigebens der Arbeitszelle (A) manuell durchgeführt wird.

8. Verfahren nach einem der vorgehenden Ansprüche, wobei die Maschinenraumdaten mehrere Arbeitsräume (2, 2a) definieren und die aus den Maschinenraumdaten erstellten Schutzraumdaten entsprechend mehrere Schutzräume (4, 4a) definieren, die mit den jeweiligen Arbeitsräumen (2, 2a) deckend übereinstimmen.

9. Verfahren nach einem der vorhergehenden Ansprüche, wobei die Maschinenraumdaten aus Raumkoordinaten des Koordinatensystems (K) der Maschine (M) bestehen und in einer der Maschinen (M) spezifischen Sprache erstellt sind und die Schutzraumdaten ebenfalls aus Raumkoordinaten des Koordinatensystems (K) der Maschine (M) bestehen und in einer der Überwachungseinrichtung (1) spezifischen Sprache erstellt sind.

10. Konfigurationsvorrichtung (5) zum Konfigurieren einer eine automatisierte Arbeitszelle (A) überwachenden Überwachungseinrichtung (1), wobei die Arbeitszelle (A) zumindest eine gefahrbringende Maschine (M), insbesondere einen mehrachsigen Roboter, aufweist, und die Überwachungseinrichtung (1) eine Steuereinheit (1 b) aufweist,
die Konfigurationsvorrichtung (5) umfasst
eine Empfangseinheit zum Empfangen von Maschinenraumdaten, die zumindest einen Arbeitsraum (2, 2a) der Maschine (M) definieren,
eine Erstellungseinheit zum Erstellen von Schutzraumdaten aus den Maschinenraumdaten, wobei die Schutzraumdaten zumindest einen Schutzraum (4, 4a) der Überwachungseinrichtung (1) definieren, der den Arbeitsraum (2, 2a) der Maschine (M) derart umfasst, dass der Schutzraum (4, 4a) vollständig oder teilweise dem Arbeitsraum (2, 2a) entspricht oder der Schutzraum (4, 4a) größer als der Arbeitsraum (2, 2a) ist, und
eine Übertragungseinheit zum Übertragen der Schutzraumdaten an die Steuereinheit (1b) der Überwachungseinrichtung (1), so dass die Überwachungseinrichtung (1) den Schutzraum (4, 4a) überwacht.

11. Konfigurationsvorrichtung (5) nach Anspruch 10, wobei die Konfigurationsvorrichtung (5) physisch getrennt von einer Maschinensteuerung (Ma) der Maschine (M) und von der Überwachungseinrichtung (1) oder physisch in der Überwachungseinrichtung (1) vorgesehen ist.

12. Konfigurationsvorrichtung (5) nach Anspruch 10 oder 11, wobei die Maschinenraumdaten und die Schutzraumdaten auf ein gemeinsames Koordinatensystem (K), vorzugsweise das Koordinatensystem der Maschine (M), rückbezogen sind.

13. Konfigurationsvorrichtung (5) nach einem der vorhergehenden Ansprüche 10 bis 12, wobei die Erstellungseinheit angepasst ist, die Schutzraumdaten manuell oder automatisch um einen vorgebbaren Wertebereich zu erweitern, so dass der durch die Schutzraumdaten definierte Schutzraum (4, 4a) um zumindest einen zusätzlichen Schutzbereich (4b) vergrößert ist.

14. Konfigurationsvorrichtung (5) nach einem der vorhergehenden Ansprüche 10 bis 13, wobei eine Prüfeinheit zum Prüfen der Maschinenraumdaten und der Schutzraumdaten auf eine Übereinstimmung in ihren Koordinaten vorgesehen ist.

15. Konfigurationsvorrichtung (5) nach Anspruch 14, wobei eine Bestätigungseinheit zum Freigeben der Konfiguration des Schutzraums (4, 4a) der Überwachungseinrichtung (1) bei einer Konsistenz zwischen den Maschinen- und Schutzraumdaten vorgesehen ist.
